# EUROPEAN PATENT APPLICATION

(11) **EP 2 995 806 A1**
(43) Date of publication of application: **16.03.2016**
(21) Application number: 15184466.9
(22) Date of filing: 09.09.2015
(51) Int. Cl.: F02M 43/04, F02B 23/06, F02D 19/10

(54) **FUEL INJECTOR WITH DIESEL PILOT INJECTION**

(30) Priority: 09.09.2014 US 201462047821 P; 03.09.2015 US 201514844066
(71) Applicant: AVL Powertrain Engineering, Inc., Plymouth, MI 48170 (US)
(72) Inventor: Yager, James H., Northville, 48167 (US)
(74) Representative: Witte, Weller & Partner Patentanwälte mbB

(57) **Abstract**

A fuel injector (34) is provided and includes an injector body (40) having a first longitudinally extending chamber (74). The injector body (40) has a first intake port (78), a second intake port (80), and at least one fuel injection port (92). The first intake port (78) provides a first fluid to the first longitudinally extending chamber (74), the second intake port (80) provides a second fluid to the first longitudinally extending chamber (74), and the at least one fuel injection port (92) discharges the first and second fluids from the first longitudinally extending chamber (74).

## Description

### CROSS-REFERENCE TO RELATED APPLICATIONS

This application claims the benefit of U.S. Provisional Application No. 62/047,821, filed on September 9, 2014. The entire disclosure of the above application is incorporated herein by reference.

### FIELD

The present disclosure relates to a fuel injector. More particularly, the present disclosure relates to a high-pressure direct fuel injector for natural gas that includes a diesel pilot injector.

### BACKGROUND

This section provides background information related to the present disclosure and is not necessarily prior art.

Fuel injectors are used in a variety of applications to deliver a fuel, such as gasoline, to an engine. A series of fuel injectors may be incorporated into each of the various cylinders in the engine to deliver the fuel that will drive the pistons and power the engine. In some applications, fuel injectors deliver a high-pressure natural gas to an engine. In such instances, it may be desirable to have a fuel injector that can deliver a quantity of diesel fuel to the cylinders prior to, or concurrently with, the injection of high-pressure natural gas.

### SUMMARY

This section provides a general summary of the disclosure, and is not a comprehensive disclosure of its full scope or all of its features.

A fuel injector is provided and includes an injector body having a first longitudinally extending chamber. The injector body has a first intake port, a second intake port, and at least one fuel injection port. The first intake port provides a first fluid to the first longitudinally extending chamber, the second intake port provides a second fluid to the first longitudinally extending chamber, and the at least one fuel injection port discharges the first and second fluids from the first longitudinally extending chamber.

In another configuration, a fuel injector is provided and includes an injector body having a first chamber, a first intake port, and a second intake port, whereby the first intake port is in fluid communication with the first chamber. An injector valve is slidably disposed within the injector body. The injector valve includes a second chamber, whereby the second chamber is in fluid communication with the second intake port and with the first chamber.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1A is a cross-sectional view of a cylinder incorporating a fuel injector in accordance with the principles of the present disclosure;
FIG. 1 B is a top view of the cylinder of FIG. 1A;
FIG. 2A is another cross-sectional view of a cylinder incorporating a fuel injector in accordance with the principles of the present disclosure;
FIG. 2B is a top view of the cylinder of FIG. 2A;
FIG. 3 is another cross-sectional view of a cylinder incorporating a fuel injector in accordance with the principles of the present disclosure;
FIG. 4A is a schematic view of a fuel pressure regulating system, including a cross-sectional view of a fuel injector having an accumulator, in accordance with the principles of the present disclosure; and
FIG. 4B is another schematic view of the fuel pressure regulating system of FIG. 4A, including a cross-sectional view of the fuel injector in a second configuration.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

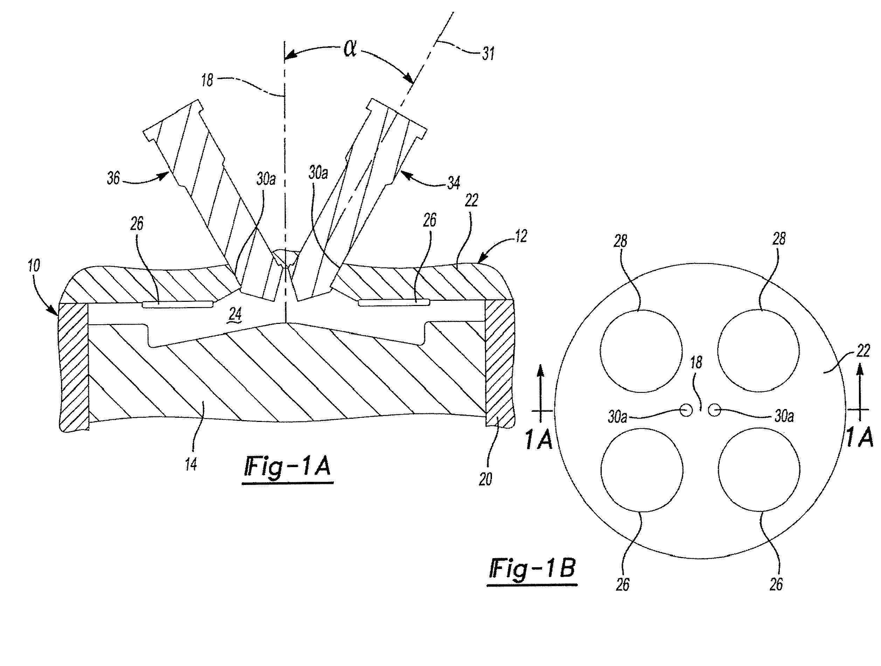

With reference to FIGS. 1A, 2A, and 3, an engine 10 is provided and may include a cylinder 12 and a piston 14. While only one cylinder 12 and one piston 14 are shown, it will be appreciated that the engine 10 may include any number of cylinders 12 and pistons 14, as is known in the art.

The cylinder 12 may include a cylinder block 20 and a cylinder head 22. The cylinder block 20 and the cylinder head 22 may define a chamber 24 having a central, longitudinal axis 18. The piston 14 may slide or otherwise move along the central axis 18 within the chamber 24 to drive a crankshaft (not shown) and provide power to the engine 10. The cylinder head 22 may include at least one intake valve assembly 26 and at least one exhaust valve assembly 28. In one configuration, the cylinder head 22 includes two intake valve assemblies 26 and two exhaust valve assemblies 28. The intake valve assemblies 26 may deliver air from an intake source (not shown) to the chamber 24 while the exhaust valve assemblies 28 deliver combustion exhaust from the chamber 24 to an exhaust system (not shown).

At least one bore 30a may be formed in the cylinder head 22 or the cylinder block 20. With reference to FIGS. 1A and 1B, in one configuration, the cylinder head 22 includes two bores 30a located proximate to the central axis 18, and generally central to the intake valve assemblies 26 and the exhaust valve assemblies 28. A longitudinal axis 31 of one of the bores 30a may be disposed at an angle (α) relative to the central axis 18.

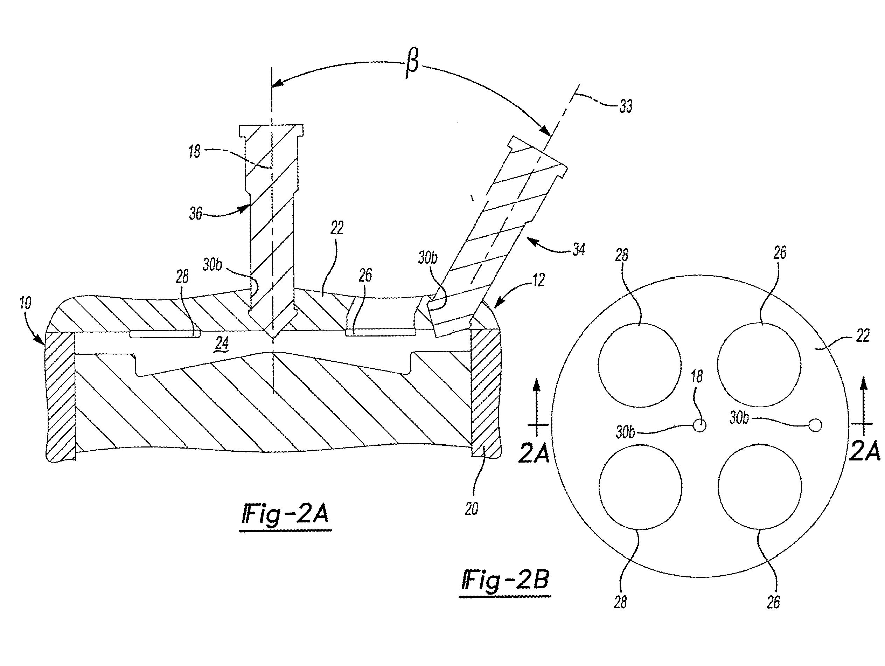

With reference to FIGS. 2A and 2B, in another configuration, the cylinder head 22 includes two bores 30b. At least one of the bores 30b may be substantially aligned with the central axis 18, while another of the bores 30b may be disposed substantially adjacent to and between the intake valve assemblies 26. Accordingly, a longitudinal axis 33 of one of the bores 30b may be disposed at an angle (β) relative to the central axis 18.

The cylinder 12 may further include at least one fuel injector 34. As will be explained in more detail, below, the fuel injector 34 may be a high-pressure fuel injector that injects natural gas and/or a pilot fuel (e.g., diesel) into the chamber 24 of the cylinder 12. In this regard, while the fuel injector 34 is described as injecting natural gas and/or diesel, the fuel injector 34 may inject any other suitable fuel into the chamber 24.

With reference to FIGS. 1A and 2A, the fuel injector 34 may be disposed in one of the bores 30a, 30b while a second injector 36, a spark plug (not shown), or another suitable device (e.g., a micro-pilot) for igniting the fuel supplied by the fuel injector 34 may be disposed in the other bore 30a, 30b.

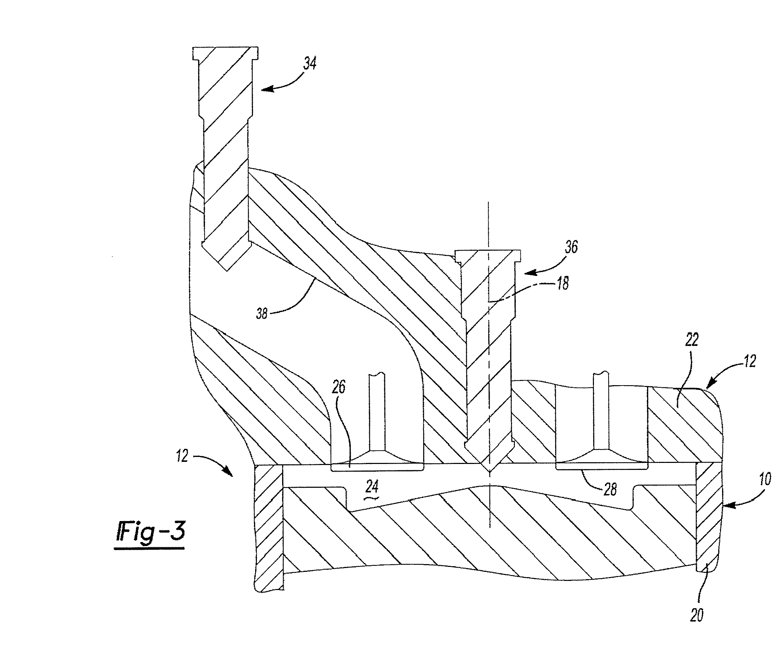

With reference to FIG. 3, in another configuration, the fuel injector 34 may be disposed within an intake port 37 of an engine 10. The intake port 37 may be in fluid communication with at least one intake valve assembly 26. Accordingly, the fuel injector 34 may deliver fuel to the chamber 24 via the intake port 37.

The fuel injector 34 may be part of a fuel injection system 38. Accordingly, the fuel injection system 38 may include the fuel injector 34, and a fuel pressure regulating system 39. A further discussion of the fuel pressure regulating system 39, including various configurations and functions thereof, may be found in commonly owned U.S. Patent Application No. 62/005342, entitled "Fuel Injector," which is hereby incorporated by reference in its entirety.

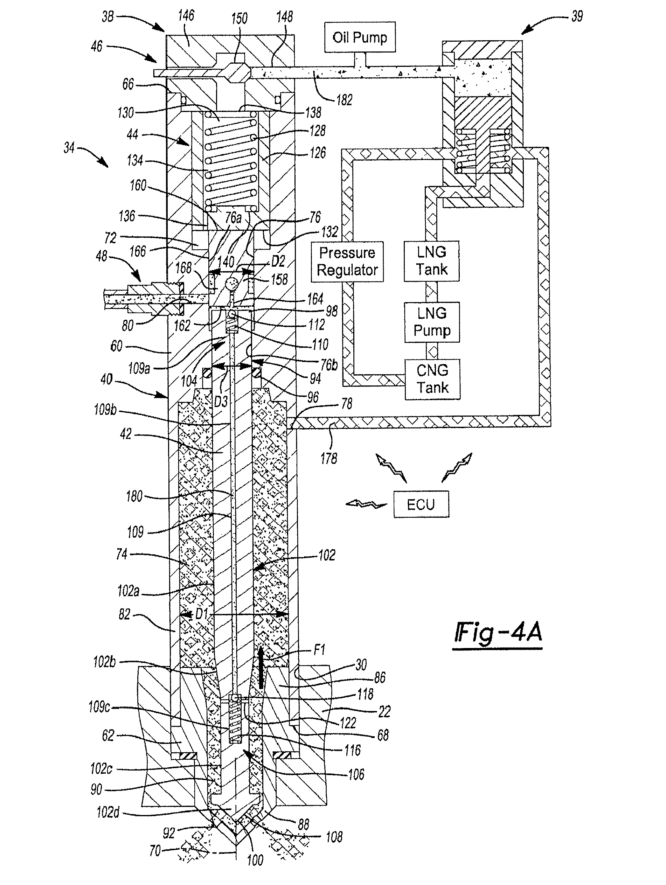

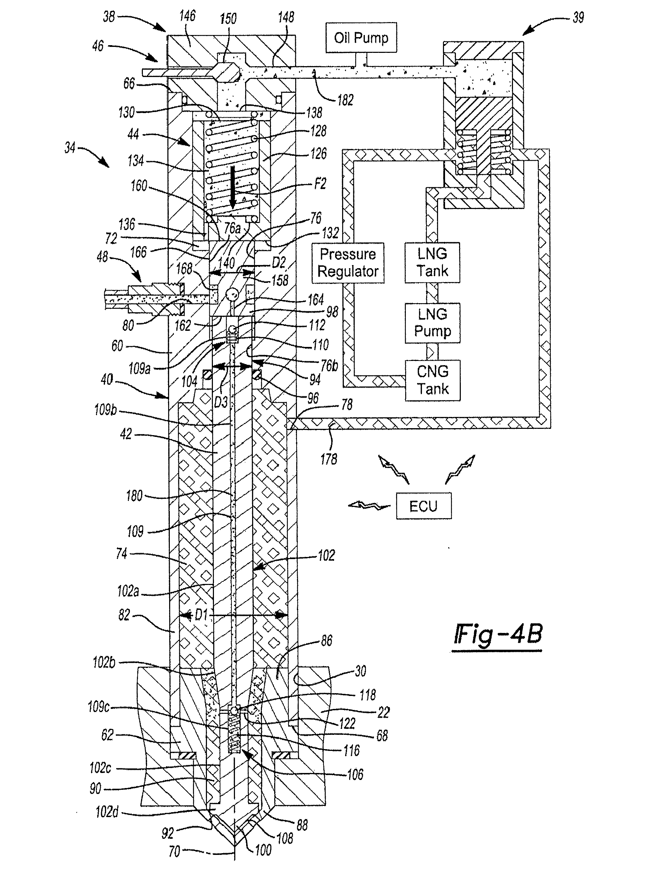

With reference to FIGS. 4A and 4B, the fuel injector 34 may include an injector body 40, a needle or injector valve 42, a biasing mechanism 44, a control valve assembly 46, and a pilot fuel injector or supply mechanism 48.

The injector body 40 may include a housing 60 and a tip or nozzle 62. In an assembled configuration, injector body 40 may be disposed within the bore 30 of the cylinder head 22 or a portion of the intake port 38. The housing 60 may extend from a proximal end 66 to a distal end 68 along a longitudinal axis 70, and may include a first or proximal chamber 72, a second or distal chamber 74, a third or central chamber 76, a first intake port 78, and a second intake port 80.

The proximal chamber 72 may be formed in the proximal end 66 of the housing 60 and extend along, and generally concentric to, the axis 70. The distal chamber 74 may be formed in the distal end 68 of the housing 60 and extend along, and generally concentric to, the axis 70. As will be explained in more detail below, the proximal and distal chambers 72, 74 can fluidly communicate with the fuel pressure regulating system 39. In this regard, the distal chamber 74 may function as an accumulator for fuel received from the fuel pressure regulating system 39. Accordingly, the distal chamber 74 may be referred to herein as the accumulator 74.

As illustrated, the accumulator 74 may include, or otherwise be defined by an axially extending flange or wall 82 of the housing 60. In one configuration, the wall 82 may be substantially cylindrical, including an inner diameter D1. As will be explained in more detail below, the accumulator 74 may allow the injector 34 to deliver fuel into the chamber 24 of the cylinder 12 in a very short period of time. For example, the accumulator 74 may allow the injector 34 to deliver fuel to the chamber 24 in approximately thirty (30) crank degrees, such that, of the seven hundred twenty (720) crank degrees in a four-cycle engine, one hundred percent (100%) of the fuel may be delivered in four percent (4%) of the total cycle time. Placing the accumulator 74 directly in line with, and concentric to, the injector valve 42 can help to avoid line losses and other inefficiencies during operation of the injector 34.

The first intake port 78 may extend through the housing 60, such that the first intake port 78 can fluidly communicate with the accumulator 74. In this regard, the first intake port 78 may be an aperture formed through the wall 82 of the housing 60. The first intake port 78 may supply a high-pressure natural gas or, alternatively, may supply any suitable fluid from the fuel pressure regulating system 39 to the accumulator 74.

The central chamber 76 may extend from and between the proximal and distal chambers 72, 74, and may include a proximal portion 76a and a distal portion 76b. The proximal portion 76a may open into the proximal chamber 72. The second intake port 80 may be in fluid communication with the proximal portion 76a. In this regard, the second intake port 80 may include an aperture extending through the housing 60. The second intake port 80 may be a low-pressure diesel fuel port or, alternatively, may supply any suitable fluid to the proximal portion 76a of the central chamber 76.

The distal portion 76b may open into the accumulator 74. As illustrated, the proximal portion 76a may define a diameter D2 and the distal portion 76b may define a diameter D3. The diameter D3 may be smaller than the diameter D1 of the accumulator 74 and may be larger than the diameter D2 of the proximal portion 76a.

The nozzle 62 of the injector body 40 may include a boss portion 86, a tip portion 88, and a nozzle chamber 90. The boss portion 86 may be disposed within the distal chamber 74, such that the housing 60 is coupled to the nozzle 62. In this regard, the nozzle 62 may be fastened to the housing 60 using a threaded configuration, a press-fit configuration, or by using other suitable mechanical fastening techniques. Alternatively, the nozzle 62 may be integrally formed with the housing 60 in a monolithic construct. The nozzle chamber 90 may be disposed within the boss portion 86 and/or the tip portion 88, such that the nozzle chamber 90 opens into, and is in fluid communication with, the accumulator 74 in the assembled configuration. The tip portion 88 may be generally conically shaped and may include between two (2) and twelve (12) apertures or fuel injection ports 92 that provide fluid communication between the nozzle chamber 90 and the chamber 24 of the cylinder 12. It will be appreciated that the number and configuration of the fuel injection ports 92 may vary depending on the particular use or application of the fuel injector 34.

The injector valve 42 may be located within the housing 60 and/or the nozzle 62. As will be explained in more detail below, the injector valve 42 may be translatable within the central chamber 76, the accumulator 74, and the nozzle chamber 90 in a direction substantially parallel to the longitudinal axis 70. In this regard, the housing 60 may include a seal assembly 94 disposed between the central chamber 76 and the accumulator 74. The seal assembly 94 may sealingly engage the injector valve 42 and the housing 60 to prevent fluid communication between the central chamber 76 and the accumulator 74. In this regard, the seal assembly 94 may include an O-ring 96 or other suitable annular sealing construct.

The injector valve 42 may extend from a proximal end 98 to a distal end 100 along the longitudinal axis 70, and may include a stem 102, a first valve mechanism 104, and a second valve mechanism 106. The stem 102 may include a first or proximal portion 102a, a second or central portion 102b, a third or distal portion 102c and a fourth or tip portion 102d. A diameter of the first portion 102a may be less than a diameter of the third portion 102c. In this regard, as illustrated, the second portion 102b may be disposed between the first and third portions 102a, 102c and may include a tapered or frustoconically shaped outer wall having an outer diameter that is greater than the outer diameter of the third portion 102c. The third portion 102c of the stem 102 may include a plurality of radially extending apertures or ports 122.

The tip portion 102d of the stem 102 may extend from the third portion 102c and may include a conically shaped surface 108, such that the fourth portion 102d is receivable within the conically shaped tip portion 88 of the nozzle 62. A maximum outer diameter of the tip portion 102d may be less than the outer diameter of the second portion 102b.

A longitudinally extending chamber or bore 109 may extend at least partially through the first, second, third, and fourth portions 102a, 102b, 102c, 102d of the stem 102, such that at least a portion of the stem 102 is a generally hollow construct. The bore 109 may include a proximal or inlet portion 109a, a central portion 109b, and a distal portion 109c. The proximal portion 109a may be formed in the proximal end 98 of the stem 102 and may extend along the axis 70. In this regard, the proximal portion 109a can allow for fluid communication between central chamber 76 of the housing and the bore 109, and/or fluid communication between the pilot fuel supply mechanism 48 and the bore 109.

The distal portion 109c of the bore 109 can be formed proximate to the distal end 100 of the stem 102. In this regard, the distal portion 109c of the bore 109 may extend through the third stem portion 102c, such that the distal portion 109c is closed by the tip portion 102d of the stem 102.

The central portion 109b can be formed between the proximal and distal portions 109a, 109c. In this regard, the central portion 109b can fluidly communicate with the proximal and distal portions 109a, 109c. As illustrated, in some configurations, the central portion 109b extends through the second stem portion 102b and through at least a portion of the first stem portion 102a. A diameter of the central portion 109b may be less than a diameter of the proximal portion 109a and a diameter of the distal portion 109c.

The first valve mechanism 104 can be disposed within the proximal portion 109a of the bore 109. As will be explained in more detail below, the first valve mechanism 104 may be a ball-check valve for selectively allowing fluid communication between the central chamber 76 of the injector body 40 and the bore 109 of the injector valve 42. In this regard, the first valve mechanism 104 can be a one-way valve for allowing fluid communication from the central chamber 76 to the bore 109, and preventing fluid communication from the bore 109 to the central chamber 76 and/or from the bore 109 to the pilot fuel supply mechanism 48. Accordingly, the first valve mechanism 104 may include a biasing member 110 and a ball-check 112.

The second valve mechanism 106 can be disposed within the distal portion 109c of the bore 109. As will be explained in more detail below, the second valve mechanism 106 may be a ball-check valve for selectively allowing fluid communication between the accumulator 74 of the injector body 40 and the bore 109 of the injector valve 42. In this regard, the second valve mechanism 106 can be a one-way valve for allowing fluid communication from the bore 109 to the accumulator 74 through the ports 122, and preventing fluid communication from the accumulator 74 to the bore 109 through the ports 122. Accordingly, the second valve mechanism 106 may include a biasing member 116 and a ball-check 118.

The biasing mechanism 44 may include a housing 126 and a biasing member 128. As illustrated, the biasing mechanism 44 may be movably disposed within the proximal chamber 72 of the injector body 40, such that the biasing mechanism 44 can translate in a direction substantially parallel to the axis 70 within the proximal chamber 72. The housing 126 may include a substantially cylindrical construct, including an open proximal end 130 and a substantially closed distal end 132. The housing 126 may include an inner chamber 134 between the proximal and distal ends 130, 132. The distal end 132 can include an aperture or port 136 in fluid communication with the proximal chamber 72 of the injector body 40 and the inner chamber 134 of the housing 126. The biasing member 128 may include a helical spring having a first end 138 and a second end 140. The biasing member 128 can be disposed within the inner chamber 134 such that the first end 138 engages control valve assembly 46, and the second end 140 engages the distal end 132 of the housing 126. In this regard, the biasing member 128 can bias the housing 126 within the proximal chamber 72, such that the housing 126 translates along the axis 70.

The control valve assembly 46 may include a housing 146 having a fluid passage 148 and a valve member 150. In this regard, the control valve assembly 46 may be coupled to the proximal end 66 of the injector body 40, such that the fluid passage 148 is in fluid communication with the fluid pressure regulating system 39 and with the inner chamber 134 of the biasing mechanism 44. Accordingly, the control valve assembly 46 may prevent fluid communication between the fluid pressure regulating system 39 and the inner chamber 134 in a first configuration (FIG. 4A) and may allow fluid communication between the fluid pressure regulating system 39 and the inner chamber 134 in a second configuration (FIG. 4B).

The pilot fuel supply mechanism 48 may be located within the proximal and/or central chambers 72, 76. Specifically, the mechanism 48 may be located within the proximal portion 76a of the central chamber 76, and may be translatable along the axis 70. In this regard, the pilot fuel supply mechanism 48 may include a pumping mechanism or housing 158 slidably disposed within the proximal portion 76a of the chamber 76. In this regard, the housing 158 may include a diameter that it substantially equal to, or slightly less than, the diameter of the proximal portion 76a, such that the housing 158 is sealingly engaged with the injector body 40 while translating along the axis 70.

The housing 158 may extend from a proximal end 160 to a distal end 162 along the axis 70, and may include a fluid passage system 164. As will be explained in more detail below, the fluid passage system 164 may be in fluid communication with the second intake port 80 and the central chamber 76 of the housing 60. In this regard, an outer surface 166 of the housing 158 may include an annular groove or channel 168 in fluid communication with the second intake port 80 and the fluid passage system 164. The channel 168 may be in fluid communication with the second intake port 80 as the housing 158 translates within the central chamber 76. The fluid passage system 164 may be in fluid communication with the channel 168, the proximal portion 76a of the central chamber 76, and/or the bore 109 of the stem 102.

In an assembled configuration, the housing 158 of the pilot fuel supply mechanism 48 may be located within the central chamber 76, such that the proximal end 160 is adjacent to the distal end 132 of the biasing mechanism 44, and the distal end 162 is adjacent to the proximal end 98 of the injector valve 42. In this regard, it will be appreciated that translation of the biasing mechanism 44 in a first direction along the axis 70 causes translation of the housing 158 and the injector valve 42 in the first direction along the axis 70. Similarly, translation of the injector valve 42 in a second direction (opposite the first direction) along the axis 70 causes translation of the housing 158 and the biasing mechanism 44 in the second direction along the axis 70.

Operation of the fuel injection system 38, including the fuel injector 34, will now be described in more detail. As described above, the fuel injector 34 may be disposed within the cylinder block 20, the cylinder head 22, or the intake port 38 such that the fuel injection ports 92 fluidly communicate with the chamber 24.

In a first mode of operation, high-pressure gas 178, or other suitable fluid, can be supplied from the fluid pressure regulating system 39 to the accumulator 74 through the first intake port 78. The high-pressure gas 178 applies a force F1 on the second portion 102b of the injector valve 42, causing the injector valve 42 to translate in the second direction within the accumulator 74 and into an open position. With the injector valve 42 in the open position (FIG. 4A), the fuel injection ports 92 allow fluid communication between the accumulator 74 and the chamber 24 of the cylinder 12. As the injector valve 42 translates in the second direction from the closed position (FIG. 4B) to the open position (FIG. 4A) in the manner described above, the high-pressure gas 178 enters the accumulator 74 from the first intake port 78 and thereafter travels into the chamber 24 of the cylinder 12 from the accumulator 74. Once in the chamber 24, the high-pressure gas 178 is compressed by the piston 14 as part of the combustion cycle of the engine 10.

As the injector valve 42 translates in the second direction, the proximal end 98 of the injector valve 42 contacts the distal end 162 of the housing 158, causing the housing 158 to translate in the second direction within the central chamber 76 and into the first position (FIG. 4A). In the first position, the pilot fuel supply mechanism 48 pumps a low-pressure fluid 180 (e.g., diesel fuel, or another suitable pilot ignition fluid) through the second intake port 80 and into the central chamber 76 of the housing 60. The proximal end 160 of the mechanism 48 contacts the distal end 132 of the housing 126, causing the housing 126 to translate in the second direction within the proximal chamber 72. The second valve mechanism 106 is in a closed position, thus preventing fluid communication from the accumulator 74 to the bore 109 through the ports 122.

It will be appreciated that the quantity of low-pressure fluid 180 supplied to the central chamber 76 can be varied by using an inlet orifice (not shown) and regulating or otherwise varying the supply pressure of the low-pressure fluid 180, such that the fuel injection system 38 can be operated using only the low-pressure fluid 180 during certain modes of operation (e.g., start-up, warm-up, light load, and/or idle). In this regard, it will also be appreciated that the volume of the central chamber 76 can be sized such that the pilot fuel supply mechanism 48 delivers a minimum acceptable pilot quantity of the low-pressure fluid 180 at a minimum acceptable supply pressure.

In a second mode of operation, the control valve assembly 46 may be in an open position, thereby allowing fluid communication between the inner chamber 134 of the biasing mechanism 44 and the fluid passage 148 and, thus, the fluid pressure regulating system 39. With the control valve assembly 46 in the open position, a high-pressure fluid 182 (e.g., oil) enters the inner chamber 134 from the fluid passage 148 and applies a force F2 on the housing 126 of the biasing mechanism 44, causing the housing 126 to translate in the first direction within the proximal chamber 72. A portion of the fluid 182 in the inner chamber 134 may exit through the port 136 and enter proximal chamber 72, thereby reducing the magnitude of the force F2, and reducing the speed and acceleration of the housing 126.

As the housing 126 translates in the first direction, the distal end 132 of the housing 126 contacts the proximal end 160 of the pilot fuel supply mechanism 48, causing the pilot fuel supply mechanism 48 to translate in the first direction within the central chamber 76. As the pilot fuel supply mechanism 48 translates in the first direction, the distal end 162 of the mechanism 48 contacts the proximal end 98 of the injector valve 42, causing the injector valve 42 to translate in the first direction within the accumulator 74 and into a closed position. In this regard, the tip portion 102d of the injector valve 42 sealingly engages the tip portion 88 and the fuel injection ports 92 of the nozzle 62, to prevent fluid communication between the accumulator 74 and the chamber 24 of the cylinder 12.

As the injector valve 42 translates in the first direction from the open position (FIG. 4A) to the closed position (FIG. 4B) in the manner described above, the pilot fuel supply mechanism 48 compresses the fluid 180 within the central chamber 76, causing the fluid 180 to enter the bore 109 of the stem 102 from the central chamber 76, and thereafter enter the accumulator 74 from the bore 109. In this regard, compressing the fluid 180 within the central chamber 76 causes the first and second valve mechanisms 104, 106 to open, thus allowing the fluid 180 to enter the bore 109 and the accumulator 74 from the central chamber 76.

As the injector valve 42 translates in the second direction from the closed position (FIG. 4B) to the open position (FIG. 4A) in the manner described above, the high-pressure gas 178 enters the accumulator 74 and forces the high-pressure gas 178 and the fluid 180 to discharge into the chamber 24 of the cylinder 12 from the accumulator 74, where the combustion cycle is completed in the manner described above.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

It follows a list of further embodiments according to the disclosure of the present invention:
1. A fuel injector comprising:
   an injector body including a first longitudinally extending chamber, the injector body having a first intake port, a second intake port, and at least one fuel injection port, the first intake port operable to provide a first fluid to the first longitudinally extending chamber, the second intake port operable to provide a second fluid to the first longitudinally extending chamber, and the at least one fuel injection port operable to discharge the first and second fluids from the first longitudinally extending chamber.
2. The fuel injector of embodiment 1, wherein the first fluid is diesel fuel and the second fluid is natural gas.
3. The fuel injector of embodiment 1, further comprising a pumping mechanism translatably disposed within the injector body and operable to pump the second fluid to the first longitudinally extending chamber.
4. The fuel injector of embodiment 3, further comprising a control valve asssembly operable to control the flow of a third fluid that drives the pumping mechanism.
5. The fuel injector of embodiment 1, further comprising an injector valve disposed within the first longitudinally extending chamber and operable to prevent fluid communication between the first intake port and the second intake port.
6. The fuel injector of embodiment 1, wherein the injector body includes a second longitudinally extending chamber and the second intake port is in fluid communication with the second longitudinally extending chamber.
7. The fuel injector of embodiment 6, further comprising an injector valve extending between the first and second longitudinally extending chambers.
8. The fuel injector of embodiment 7, wherein the injector valve is operable to allow fluid communication between the first longitudinally extending chamber and the second longitudinally extending chamber.
9. The fuel injector of embodiment 7, wherein the injector valve is operable to prevent fluid communication from the first longitudinally extending chamber to the second longitudinally extending chamber.
10. The fuel injector of embodiment 7, wherein the injector valve includes a longitudinally extending bore having a first end in fluid communication with the first longitudinally extending chamber and a second end in fluid communication with the second longitudinally extending chamber.
11. The fuel injector of embodiment 10, wherein the longitudinally extending bore includes first and second valve mechanisms disposed therein.
12. The fuel injector of embodiment 7, further comprising a seal assembly sealingly disposed between the injector valve and the injector body.
13. The fuel injector of embodiment 7, further comprising a third longitudinally extending chamber, the second longitudinally extending chamber disposed between the first and third longitudinally extending chambers, the injector valve being operable to prevent fluid communication between (i) the first longitudinally extending chamber and (ii) the second and third longitudinally extending chambers.
14. The fuel injector of embodiment 7, wherein the injector valve includes a one-way valve for allowing fluid communication from the second longitudinally extending chamber to the first longitudinally extending chamber.
15. The fuel injector of embodiment 14, further comprising a pumping mechanism translatably disposed within the injector body and operable to force the second fluid through the one-way valve from the second longitudinally extending chamber to the first longitudinally extending chamber.
16. A fuel injector comprising:
   an injector body including a first chamber, a first intake port and a second intake port, the first intake port in fluid communication with the first chamber; and
   an injector valve slidably disposed within the injector body, the injector valve including a second chamber, the second chamber in fluid communication with the second intake port and with the first chamber.
17. The fuel injector of embodiment 16, wherein the first intake port is a natural gas intake port, and the second intake port is a diesel intake port.
18. The fuel injector of embodiment 16, wherein the injector body includes a third chamber, and wherein the second intake port is in fluid communication with the third chamber.
19. The fuel injector of embodiment 18, further comprising a pumping mechanism slidably disposed within the third chamber and operable to pump fluid from the third chamber to the first chamber.
20. The fuel injector of embodiment 19, further comprising a one-way valve disposed in the second chamber and selectively allowing fluid communication from the third chamber to the first chamber, wherein the pumping mechanism is operable to pump fluid through the one-way valve.

## Claims

1. A fuel injector (34) comprising:
an injector body (40) including a first chamber (74), the injector body (40) having a first intake port (78), a second intake port (80), and at least one fuel injection port (92), the first intake port (78) operable to provide a first fluid (178) into the first chamber (74), the second intake port (80) operable to provide a second fluid (180) to the first chamber (74), and the at least one fuel injection port (92) operable to discharge the first and second fluids (78, 80) from the first chamber (74).

2. The fuel injector (34) according to Claim 1, wherein the first fluid (178) is diesel fuel and the second fluid (180) is natural gas.

3. The fuel injector (34) according to Claim 1 or 2, further comprising a pumping mechanism (158) translatably disposed within the injector body (40) and operable to pump the second fluid (180) to the first chamber (74).

4. The fuel injector (34) according to Claim 3, further comprising a control valve assembly (46) operable to control the flow of a third fluid (182) that drives the pumping mechanism (158).

5. The fuel injector (34) according to anyone of Claims 1 to 4, wherein the injector body (40) includes a second chamber (76) and the second intake port (80) is in fluid communication with the second chamber (76).

6. The fuel injector (34) according to Claim 5, further comprising an injector valve (42) extending between the first and second chambers (74, 76).

7. The fuel injector (34) according to Claim 6, wherein the injector valve (42) is operable to allow fluid communication between the first chamber (74) and the second chamber (76).

8. The fuel injector (34) according to Claim 6, wherein the injector valve (42) is operable to prevent fluid communication from the first chamber (74) to the second chamber (76).

9. The fuel injector (34) according to anyone of Claims 6 to 8, wherein the injector valve (42) includes a longitudinally extending bore (109) having a first end in fluid communication with the first chamber (74) and a second end in fluid communication with the second chamber (76).

10. The fuel injector (34) according to Claim 9, wherein the longitudinally extending bore (109) includes first and second valve mechanisms (104, 106) disposed therein.

11. The fuel injector (34) according to Claim 9 or 10, further comprising a pumping mechanism (158) slidably disposed within the second chamber (76) and operable to pump the second fluid (180) from the second chamber (76) to the first chamber (74).

12. The fuel injector (34) according to Claim 11, further comprising a one-way valve (104, 106) disposed in the longitudinally extending bore (109) and selectively allowing fluid communication from the second chamber (74) to the first chamber (74), wherein the pumping mechanism (158) is operable to pump fluid through the one-way valve (104, 106).

13. The fuel injector (34) according to anyone of Claims 6 to 12, further comprising a third chamber (72), the second chamber (76) disposed between the first and third chambers (72, 74), the injector valve (42) being operable to prevent fluid communication between (i) the first chamber (74) and (ii) the second and third chambers (72, 76).

14. The fuel injector (34) according to anyone of Claims 6 to 13, wherein the injector valve (40) includes a one-way valve (104, 106) for allowing fluid communication from the second chamber (76) to the first chamber (74).

15. The fuel injector (34) according to Claim 14, further comprising a pumping mechanism (158) translatably disposed within the injector body (40) and operable to force the second fluid (180) through the one-way valve (104, 106) from the second chamber (76) to the first chamber (74).
